# EUROPEAN PATENT SPECIFICATION

(11) **EP 0 365 966 B1**
(45) Date of publication and mention of the grant of the patent: **15.09.1993**
(21) Application number: 89119171.0
(22) Date of filing: 16.10.1989
(51) Int. Cl.: F16F 15/26

(54) **Balancer for engine**
Ausgleichvorrichtung für einen Motor
Dispositif d'équilibrage pour un moteur

(30) Priority: 25.10.1988 JP 267162/88
(43) Date of publication of application: 02.05.1990
(73) Proprietor: SUZUKI JIDOSHA KOGYO KABUSHIKI KAISHA, Hamana-gun Shizuoka-ken (JP)
(72) Inventor: Shimizu, Yasuo, Hamamatsu-Shi Shizuoka-Ken (JP)
(74) Representative: Klunker . Schmitt-Nilson . Hirsch

(56) References cited:
- PATENT ABSTRACTS OF JAPAN, vol. 3, no. 49 (M-57), page 135 M57, 26th April 1979; & JP-A-54 28 914 (DAIHATSU KOGYO K.K.) 03-03-1979
- PATENT ABSTRACTS OF JAPAN, vol. 7, no. 173 (M-232)[1318], 30th July 1983; & JP-a-58 77 950 (YAMAHA HATSUDOKI K.K.) 11-05-1983

## Description

The invention relates to a balancer for an engine of a motor vehicle such as automobile or a motor bicycle, according to the precharacterizing part of the patent claim.

With a two-cycle engine of a motor bicycle, for example, a balancer shaft is generally arranged in parallel to a crank shaft and balance weights are secured to both the axial ends of the balancer shaft. The crank shaft and the balancer shaft are operatively connected with each other through a gear mechanism in a manner that both shafts are reversely rotated so that the vibrations generated by the rotation of the crank shaft can be counteracted substantially reduced by the rotation of the balance weights of the balancer shaft JP-A-58 77950 discloses a balancer in accordance with the preamble portion of the patent claim.

In general, the balancer shaft is located behind the crank shaft of an engine case to be rotatable and in parallel thereto. The balance weights are attached to both ends of the balancer shaft. The balancer shaft is operatively connected to the crank shaft at one end of the balancer shaft through the coupling gears coupled with both the crank shaft and the balancer shaft respectively so as to rotate the balancer shaft in a direction reverse to the rotation of the crank shaft. According to JP-A-58 77950, the balance weight disposed on the side of the coupling gear is in the form of a protuberance in the coupling gear of the balancer shaft. According to this construction, since the coupling gear of the balancer shaft is meshed with the coupling gear of the crank shaft, it is necessary to elongate the axial length of the coupling gear of the crank shaft because the balancer protuberance is disposed inside the coupling gear of the balancer shaft. A primary pinion is disposed on the outer side of the coupling gear of the crank shaft to transmit the power from the crank shaft to a primary gear through the primary pinion. According to the arangement described above, the distance between the horizontal central portion of the primary pinion and the crank shaft becomes relatively long, which results in an increase of the length of the crank shaft and, hence, of the dimension of the engine itself. This is undesirable for the engine and operation thereof.

JP-A-5428914 discloses a balancer for an engine in which a part of the balance weights is disposed in a space in front of the engine using the dead space around the timing belt of the engine.

The problem underlying the invention is to provide a balancer for an engine of a motor vehicle capable of making compact the dimension of the engine and improving the workability of the engine.

This problem is solved according to this invention by providing a balancer of an engine of a motor vehicle with the features of claim 1.

According to the construction described above, when the crank shaft is rotated, the balancer shaft is also rotated in synchronism therewith through the coupling gears in the direction reverse to the rotation of the crank shaft, whereby the vibrations of the crank shaft are counteracted and substantially reduced. Since the balance weights secured to one side of the balance shaft are disposed on both sides of the coupling gear, the dimension of one of these weights on the inner side of the coupling gear can be reduced in comparison with a case where only one balance weight is disposed inside the coupling gear at one end of the balancer shaft. Accordingly, the coupling gear secured to the crank shaft can be displaced inwardly, thus reducing the length of the crank shaft i.e. the size of the engine itself.

### BRIEF DESCRIPTION OF THE DRAWINGS

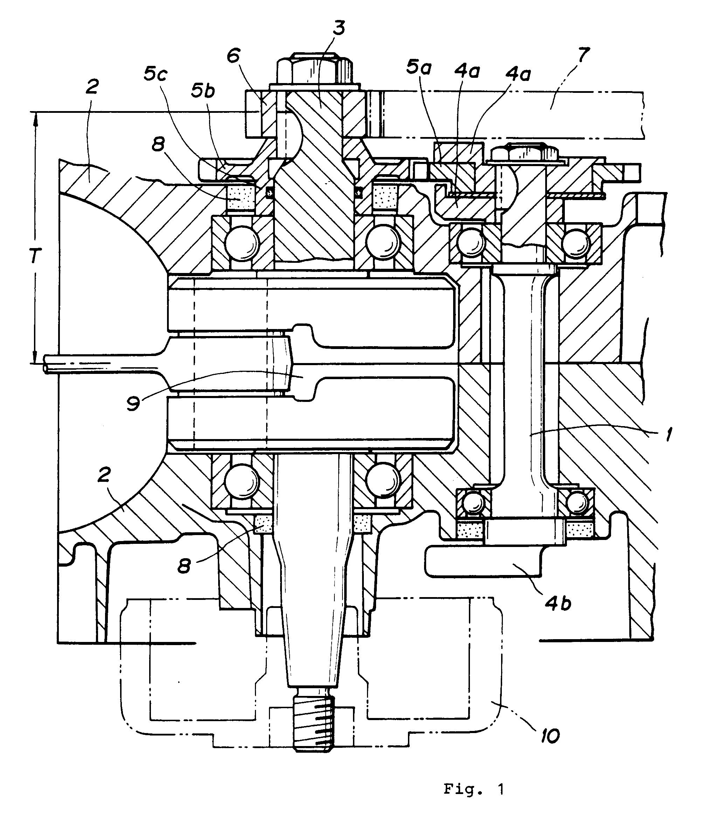

A single accompanying drawing, Fig. 1 shows an elevational section of an engine provided with a balancer according to this invention.

### DESCRIPTION OF THE PREFERRED EMBODIMENTS

Referring to the drawing showing a sectional view of a two-cycle engine, for example to which this invention is applied, a balancer shaft 1 is arranged to be rotatable and in parallel with a crank shaft 3 rotatably supported through a bearing means by an engine case 2 at a portion behind the crank shaft 3. Balance whights 4 (4a and 4b) are attached to both ends of the balancer shaft 1. At one end of the balancer shaft 1 with which a coupling gear 5a is coupled, the balance weights 4a are attached on both the sides of the coupling gear 5a so as to snap the same between the balance weights 4a and 4a. The coupling gear 5a is meshed with a coupling gear 5b attached to the crank shaft 3. A primary pinion 6 is secured to the front end (upper end in the illustration) of the crank shaft 3 and the primary pinion 6 is meshed with a primary gear 7 so as to transmit the rotation of the crank shaft 3 to a gear change mechanism, not shown.

With the two-cycle engine illustrated, an oil seal 8 is disposed outside the bearing means supporting the crank shaft 3 to maintain the air-tightness in a crank chamber 9. A magnet 10 is secured to the other end (lower end in the illustration) of the crank shaft 3.

According to the construction described above, when the crank shaft 3 is rotated, the balancer shaft 3 is also rotated in synchronism therewith through the coupling gears 5a and 5b, whereby she vibrations of the crank shaft 3 are counteracted and substantially reduced. Since the balance weights 4a and 4a are disposed on both sides of the coupling gear 5a, the demension of the weight 4a on the inner side of the coupling gear 5a can be reduced in comparison with a case where only one balance weight is disposed inside the coupling gear. Accordingly, the coupling gear 5b secured to the crank shaft 3 can be displaced inwardly, thus reducing the length of the crank shaft i.e. the size of engine itself.

## Claims

1. A balancer of an engine of a motor vehicle in which a balancer shaft (1) is located parallely with a crank shaft (3) of the engine to be rotatable in synchronism with the rotation of the crank shaft (3) in a direction reverse to the rotation of the crank shaft (3) through a coupling gear (5a) attached to one end of the balancer shaft (1), the balancer shaft being supported by balancer shaft bearings, the coupling gear (5a) being meshed with a coupling gear (5b) attached to the crank shaft (3), wherein balance weights (4a, 4b) are secured to both axial ends of the balancer, shaft (1) axially outwards from the balancer shaft bearings, characterized in that one of said balance weights comprises two parts (4a, 4b) which are attached on axial inner and outer sides of the coupling gear (5a) secured to said balancer shaft (1) so as to snap the coupling gear (5a) between the balance weight parts (4a, 4a).

## Patentansprüche

1. Ausgleichsvorrichtung für einen Motor eines Kraftfahrzeuges, in dem eine Ausgleichswelle (1) parallel zu einer Kurbelwelle (3) des Motors gelagert ist, so daß sie synchron mit der Drehung der Kurbelwelle (3) in zur Drehrichtung der Kurbelwelle (3) entgegengesetzte Richtung über ein an einem Ende der Ausgleichswelle (1) angebrachtes Kupplungsrad drehbar ist, wobei die Ausgleichswelle durch Ausgleichswellenlager gelagert ist, das Kupplungsrad (5a) mit einem an der Kurbelwelle (3) befestigten Kupplungsrad (5b) kämmt, wobei Ausgleichsgewichte (4a, 4b) an beiden axialen Enden der Ausgleichswelle (1) axial außerhalb bezüglich der Ausgleichswellenlager befestigt sind, **dadurch gekennzeichnet,** daß eines der Ausgleichsgewichte zwei Teile (4a, 4b) aufweist, die axial innen bzw. axial außen bezüglich des an der Ausgleichswelle (1) festgelegten Kupplungsrads (5a) angebracht sind, um das Kupplungsrad (5a) zwischen den Ausgleichsgewichtsteilen (4a, 4b) einzufassen.

## Revendications

1. Un dispositif d'équilibrage d'un moteur d'un véhicule à moteur dans lequel un arbre d'équilibrage (1) est situé parallèlement au vilebrequin (3) d'un moteur pour être entraîné en rotation en synchronisme avec la rotation du vilebrequin (3) en sens inverse de la rotation du vilebrequin (3), par l'intermédiaire d'un engrenage d'accouplement (5a) fixé à une première extrémité de l'arbre d'équilibrage (1), l'arbre d'équilibrage étant supporté par des portées d'arbre d'équilibrage, l'engrenage d'accouplement (5a) engrenant avec un engrenage d'accouplement (5b) fixé au vilebrequin (3), dispositif dans lequel d es masses d'équilibrage (4a, 4b) sont fixées aux deux extrémités axiales de l'arbre d'équilibrage (1), à l'extérieur, dans le sens axial, des portées de l'arbre d'équilibrage, dispositif caractérisé par le fait que l'une desdites masses d'équilibrage est constituée de deux parties (4a, 4a) qui sont fixées du côté intérieur et du côté extérieur, dans le sens axial, de l'engrenage d'accouplement (5a) fixé audit arbre d'équilibrage (1) de façon à coincer l `engrenage d'accouplement (5a) entre les parties (4a, 4a) de la masse d'équilibrage.
